## Europäisches Patentamt

## European Patent Office

## Office européen des brevets

(19)

(11) Veröffentlichungsnummer: **0 012 409**
**B2**

(12) # NEUE EUROPÄISCHE PATENTSCHRIFT

(45) Veröffentlichungstag der neuen Patentschrift:
**21.05.86**

(51) Int. Cl.⁴: **C 08 J 5/14**, B 24 D 3/28,
**C 08 L 61/10**

(21) Anmeldenummer: **79105034.7**

(22) Anmeldetag: **10.12.79**

(54) **Verfahren zur Herstellung von Schleifmitteln.**

(30) Priorität: **13.12.78 DE 2853761**

(43) Veröffentlichungstag der Anmeldung:
**25.06.80 Patentblatt 80/13**

(45) Bekanntmachung des Hinweises auf die Patenterteilung:
**13.10.82 Patentblatt 82/41**

(45) Bekanntmachung des Hinweises auf die Entscheidung
über den Einspruch:
**21.05.86 Patentblatt 86/21**

(84) Benannte Vertragsstaaten:
**AT DE FR GB IT SE**

(56) Entgegenhaltungen:
**DD - A - 121 297**
**DE - A - 1 292 082**
**DE - A - 1 694 721**
**DE - A - 2 148 089**
**DE - A - 2 224 589**
**DE - A - 2 644 552**
**DE - A - 2 738 267**
**DE - A - 2 738 267**
**DE - A - 2 853 761**
**GB - A - 1 277 295**
**US - A - 3 208 836**

**Kunststoff-Handbuch, Band X, Duroplaste, Carl Hanser Verlag München 1968, S. 51-52; S. 233-234**

(73) Patentinhaber: **HOECHST AKTIENGESELLSCHAFT,**
**Postfach 80 03 20, D-6230 Frankfurt am Main 80 (DE)**

(72) Erfinder: **Teschner, Eckart, Am Sonnenhang 10,**
**D-6274 Hünstetten (DE)**
Erfinder: **Sattelmeyer, Richard, Dr., Nonnenwaldweg 20,**
**D-6229 Schlangenbad (DE)**
Erfinder: **Hesse, Wolfgang, Dr., Pfingstbornstrasse 83,**
**D-6200 Wiesbaden (DE)**

EP 0 012 409 B2

## 0 012 409

**Beschreibung**

Gegenstand der vorliegenden Erfindung ist ein Verfahren zur Herstellung von hochliestungsfähigen Schleifmitteln auf einer flexiblen Unterlage mittels Schnelltrocknung in einem Flachbahntrockner und anschließender Härtung der zu einer Rolle aufgewickelten Schleifmittel in einer Wärmekammer.

Zur Herstellung von Schleifmitteln auf einer flexiblen Unterlage wird das Trägermaterial mit einem dünnen Film eines flüssigen Bindemittels, dem sogenannten Grundbindemittel, beschichtet. Dieses kann gegebenenfalls Füllstoffzusätze enthalten. In diesen Bindemittelfilm wird das Schleifkorn gestreut, und zwar meist auf elektrostatischem Wege, wodurch es eine erwünschte Orientierung seiner Längsachse rechtwinkelig zu der Obefläche des Trägermaterials efährt. Nach dem Aufstreuen des Korns durchläuft das Vofabrikat einen Wärmekanal, in dem das Bindemittel getrocknet bzw. angehärtet wird. Allgemein muß das Bindemittel danach soweit vefestigt sein, daß das Schleifkorn bei der weiteren Behandlung nicht mehr verschoben, umgelegt oder ausgebrochen werden kann. Dieser Prozeß dauert je nach Korngröße, auf die die Schichtdicke das Bindemittels abgestimmt wird, meist 0,5-3 Stunden, in deren Verlauf die Temperatur von 20°C auf 110 bis 120°C in bestimmten Abstufungen gesteigert wird. Dann wird eine zweite, meist mit Calciumcarbonat gefüllte stärkere Bindemittelschicht, das sogenannte Deckbindemittel, aufgetragen, die dann ebenfalls in einem Wärmekanal in 3 bis 6 Stunden bei einer Temperatur von 20°C ansteigend bis 120 bis 130°C bis zur Aushärtung behandelt wird.

Um derartig lange Verweilzeiten bei gleichzeitig hoher Produktion bewältigen zu können, müssen die Wärmekanäle zwangsläufig als mit zirkulierender Warmluft geheizte - Hänge-kanäle, wie Hängetrockner, Girlandentrockner, ausgebildet sein, die gleichwohl noch Längen bis zu 100 m für das Grundbindemittel (Vortrockenoder Zwischenhang) und bis zu mehreren 100 m für das Deckbindemittel (Haupthang) aufweisen.

Dieses Herstellverfahren erfordert daher hohe Investitionskosten und erschwert die Einhaltung einer konstanten Qualität der Fabrikate dadurch, daß durch die Dimensionierung der Hängekanäle keine gleichmäßige Temperaturverteilung möglich ist, die Heizluft nicht mit beliebig hoher Geschwindigkeit auf die hängenden Materialbahnen geführt werden kann, durch die vertikaie Anordnung der Schleifmittelbahn bei zu starker Steigerung der Trocknungstemperatur das Kunstharzbindemittel bis zum Abfließen veflüssigt werden kann und auch die mehr oder minder schafen Beigungen an den Stabsättein oder in den unteren Schlaufenteilen potentielle Fehl- oder Bruchsteilen für das Material darstellen. Die häufige Foige der unvermiedbar auftretende Wärmegefälle sind unterschiedliche Aushärtungsgrade auf engem Raum und zum Teil auch blasige Strukturen bzw. andernfalls unwirtschaftlich lange Trocknungs- und Härtungszeiten.

In der DE-OS 21 46369 ist zwar die Möglichkeit erwähnt worden, Schleifmittel unter Verwendung von Flachbahntrocknern herzustellen; Vefahrensmerkmale, die diese Ausführungsform ermöglichen, sind dort jedoch nicht genannt. Infolgedessen ist die Möglichkeit der praktischen Durchführung auch von den Fachleuten der Praxis angezweifelt worden.

Es ist auch schon in der DE-OS 2644552 beschrieben, Flachbahntrockner, die in anderen Industriezweigen üblich sind, in einer für die Schliefmittelindustrie geeigneten Weise zu modifi zieren und für die Schleifmittelherstellung heranzuziehen. Dabei war es jedoch notwendig, eine wäßrige Mischung mindestens eines Resols und eines Polyvinylalkohols als Bindemittel, gegebenenfalls zusammen mit weiteren üblichen Zusatzstoffen, zu verwenden. Dabei wurde die Grundbindemittelschicht bis zur Nachleimfestigkeit und die Deckbindemittelschicht bis zur Aufrollfestigkeit jeweils bei einer Temperatur von 100-140°C unter Verwendung eines horizontalen Wärmekanals getrocknet, der mit Düsen für die Einführung von Luft versehen ist, wobei nach jeder Trocknungsphase eine Abkühlung mittels eines Luftstroms von höchstens 40° C. vorzugsweise 10-25° C auf 20-40° C, vorzugsweise 25-30°C, z.B. in weniger als 3 Minuten, vorzugsweise weniger als 1 Minute efolgt.

Unter "Nachleimfestigkeit" wird der Trocknungsgrad verstanden, der nach Abkühlung des Halbfabrikats auf ca. 25°C ein Umlegen, Verschieben oder auch Ausbrechen des Schleifkorns gerade nicht mehr zuläßt "Aufrollfest" ist die vorgetrocknete Deckschicht dann, wenn sie nach Abkühlung auf ca. 25°C an einem mit Fingerdruck angepreßten, weißen Schreibpapier keine Abdruckspuren des Bindemittels mehr hinterläßt.

Nach lockerem Aufrollen der mit der angetrockneten Deckbindemittelschicht versehenen Schleifmittel wird die Härtung nach einem in der Schleifmittelindustrie üblichen Verfahren in der Rolle vorgenommen, z.B. durch allmähliches Aufheizen auf 100-140°C in einer beheizten Kammer, in der Luft zirkuliert und Abkühlen des Materials unter 50-60°C. Dabei werden die Heiz- und Kühlluft so geführt, daß sie überwiegend in axialer Richtung durch das aufgewickelte Material strömen. Die Aushärtung in der Wärmekammer erfolgt nach einer Temperatur-Zeit-Kurve, wobei die Temperatur im Laufe von 2-15, vorzugsweise 5-10 Stunden allmählich von 20 auf 100-140°C, vorzugsweise auf 105-120°C ansteigt und anschlie-ßend im Laufe von 5-20, vorzugsweise 7-16 Stunden auf höchstens 60° C, vorzugsweise auf höchstens 50° C abfallt. Anschließend wird eine Reklimatisierung des Materials vorgenommen, deren Dauer vom Material abhängt und im allgemeinen 2-48, Stunden beträgt. Die Härtung und Reklimatiserung kann in derselben oder einer besonderen separaten Kammer vorgenommen werden.

Der Einsatz derartiger Wärmekammern zeichnet sich gegenüber den bisher verwendeten Hängetrocknern durch eine hohe Wirtschaftlichkeit aus, das die bisherigen hohen apparativen Kosten entfallen und die Anlage darüber hinaus einen weitaus geringeren Platzbedarf erfordert.

Nach diesem zuletzt genannten Herstellverfahren von Schleifmitteln in einer Horizontal-Trockenanlage lassen sich bisher nur Kombinationen von Phenolharzen mit Polyvinylalkohol anwenden, da der physikalisch antrocknende Polyvinylalkohol die erforderliche rasche Antrocknung bis zur Nachleimfestigkeit bzw. Aufrollfestigkeit bewirkte. Die Einarbeitung des Polyvinylalkohols ist nur möglich, indem dieser in Form einer verdünnten, z.B. 16-40%igen wäßrigen Lösung oder in fester Form zusammen mit Wasser zugegeben wird.

2

**0 012 409**

Dadurch wird in das Bindemittelsystem eine erheblicher Anteil Wasser eingebracht, dessen Verdampfung während des Trockenvorganges einmal einen zusätzlichen Energieaufwand und zum anderen auch eine besonders vorsichtige Handhabung erfordert, um Blasenbildung und andere Störungen zu vermeiden.

Es ist daher wünschenswert, ein Verfahren zur Schnelltrocknung von Schleifmitteln in Horizontal-Trocknern zur Vefügung zu haben, das ohne die Mitverwendung von Polyvinylalkohol durchgeführt werden kann und qualitativ einwandfreie, hochbeansprüchbare Schleifmittel ergibt. Dies wird durch die Erfindung ermöglicht.

Gegenstand der Erfindung ist ein Verfahren zur Herstellung von Schleifmitteln, die mindestens zwei Bindemittelschichten enthalten, unter Verwendung mindestens eines wäßrigen, aus einem einwertigen Phenol hergestellten Resols 1) mit einem Molverhältnis des Phenols zu Formaldehyd von 1:1,1 bis zu 1:2,5 mit oder ohne weitere übliche Zusätze, wobei eine erste Bindemittelschicht auf ein flächenförmiges flexibles Trägermaterial aufgetragen und diese Überzugsschicht nach Aufstreuen des Schleifkornes unter Verwendung einer horizontalen Trocknungsanlage bis zur Nachleimfestigkeit getrocknet und danach, mittels eines Luftstroms abgekühlt wird, wobei das beschichtete Trägermaterial mit Geschwindigkeiten über 5 m/min durch die scharf begrenzte und einzeln regulierbare Heiz- und Kühlzonen aufweisende Trockenanlage geführt und dabei von einem Luftstrom mit einer Geschwindigkeit von 5 - 260 m/s durch die Schlitzdüse mit Austrittstemperaturen der Luft von 20 - 300°C je nach Temperaturzone angeströmt wird, wonach eine zweite Bindemittelschicht aus dem gleichen oder einem anderen Bindemittel aufgebracht und in der für die erste Stufe angegebenen Weise bis zur Aufrollfeistigkeit getrocknet und danach abgekühlt wird, wobei die Schlitzdüsen für die Aufheizung und Abkühlung jeweils quer zur Laufrichtung der Schleifmittelbahn angeordnet sind und die Luft durch jeweils benachbarte Absaugdüsen abgesaugt wird und die Endhärtung nach lockerem Aufrollen mittels eines üblichen Verfahrens in der Rolle erfolgt, dadurch gekennzeichnet, daß wenigstens eine aus einer wäßrigen Mischung verschiedener Phenolharze bestehende Mischung aufgebracht wird, wobei die Mischung aus mindestens einem Resol 1 in dem das Molverhältnis des Phenols zu Formaldehyd vorzugsweise 1:1,3 bis 1:2,2 beträgt und das vorzugsweise vorwiegend orthostrukturiert ist, und mindestens einem Kondensationsprodukt 11) aus einer Phenolkomponente aus 100-16 Mol-% mehrwertigem Phenol und 0-90 Mol-% einwertigem Phenol mit Formaldehyd besteht, wobei das molare Verhältnis der eingesetzten Mengen an Formaldehyd zur Summe der Phenole (6,6-1,5):1 beträgt. Dieses Verfahren, bei dem das beschichtete Trägermaterial die Heiz- und Kühlzonen vorteilhaft mit Geschwindigkeiten von 10-200, vorzugsweise 20-100 m/min durchläuft, ermöglicht also eine Schnelltrocknung in einer Horizontal-Intensivtrocknanlage.

Als Horizontal-Intensive-Trockner kommen solche in Betracht, durch die das Schleifmittel waagerecht oder annähernd waagerecht geführt wird, z.B. Flachbett-Trockner und Horizontal-Wärmekanäle, die in der weiter unten beschriebenen Weise ausgestaltet sind.

Das horizontale Trocken-Aggregat, das die waagerecht gestreckt oder schwach konvex geführte Schleifmittelbahn beispielsweise auf Rollen, Walzen, Transportbändern oder Luftkissen durchläuft, ist im Gegensatz zu den üblichen Flachbahntrocknern und insbesondere zu den Hängetrocknern mit Düsen für ein gasförmiges Heizmedium, z.B. Warmluft, mit einem minimalen, gleichmäßigen Abstand zu der Schleifmittelbahn versehen. Dies gewährleistet hohe Umwälzleistungen und hohe Blasgeschwindigkeiten des Heizmediums, die bei 5-200, vorzugsweise 20-100 m/s und insbesondere 40-80 m/s liegen, und gleichzeitig ein minimales Volumen im genannten Trocken-Aggregat. Vorzugsweise wird das beschichtete Trägermaterial über die volle Bahnbreite angeströmt. Das kleine Volumen wird durch eine geringe Höhe des Innenraumes der Trockenanlage erreicht, die im allgemeinen 10-60 cm, vorzugsweise 15-40 cm beträgt. Die spaltförmig ausgebildeten Blasdüsen erstrekken sich quer zur Laufrichtung der Schleifmittelbahn über die volle Bahnbreite. Sie wechseln sich mit ebenfalls spaltförmigen Absaugöffnungen ab. Jeder Blasdüse muß mindestens eine Absaugdüse parallel zugeordnet sein. Das beschichtete Trägermaterial kann während des Aufheizens und/oder der Abkühlung der Beschichtung auf der nicht beschichteten Seite auch von Kühlluft angeströmt werden, wobei die Zuführung der Kühlluft allein auf der nicht beschichteten Seite, insbesondere für die Behandlung der Deckon Vorteil ist. Die Düsen sind z.B. im Abstand von 2-50 cm, vorzugsweise 3-20 cm über der Beschichtung bzw., wenn die Kühlluft auf die nicht beschichtete Seite geblasen wird, vom Trägermaterial angebracht. Kurze Abstände zwischen den Düsen und der Beschichtung sowie hohe Blasgeschwindigkeit tragen die Turbulenz des Heizmediums bis an die Obefläche des Bindemittels und gewährleisten dadurch einen außerordentlich hohen Wärmeübergang.

Durch die beschriebene Anordnung und Arbeitsweise werden Wärmegefälle quer zur Laufrichtung ausgeschlossen, so daß die Bindemittel in jedem Trocknungsstadium mit der maximal zulässigen Wärmemenge und Temperatur, begrenzt durch das Auftreten von bleibenden Blasen im Bindemittel behandelt und damit in der kürzest möglichen Zeit getrocknet und auch gehärtet werden können. Durch diese Anordnung wird die Zufuhr hoher Wärmemengen auf die Bindemittelschicht und somit eine hohe Trocknungsgeschwindigkeit im ersten Stadium ermöglicht, ohne daß die Gefahr des Ablaufens des durch die rasche Temperaturerhöhung stark veflüssigten Phenolharzes besteht.

Während z.B. bei der Hangtrocknung des Deckbindemittels die Energiezufuhr durch die Fließgrenze des Bindemittels außerordentlich gehemmt wird, braucht man bei der Horizontal-Trocknung auf die Verflüssigung des Bindemittels keine Rücksicht zu nehmen; die Energiezufuhr wird im Gegenteil bewußt bis zum lebhaften Aufkochen des Bindemittels hochgetrieben. Der Trockenvorgang kann z.B. bei einer Temperatur von 110-160°C efolgen. Daraus resultieren zum einen eine Abkürzung der Antrocknungszeiten von 30-60 auf weniger als 5, insbesondere weniger als 3, z.B. 2-5 Minuten, d.h. eine Verkürzung auf rund ein Zehntel, und zum anderen ein unerreicht gutes Verlaufen des Bindemittels und eine dadurch bewirkte optimale Verankerung des

3

**0 012 409**

Schleifkornes. Entscheidend dabei ist der abrupte Abbruch des Trocknungsvorganges in der kritischen Phase des Überganges der Energiezufuhr von der Wasserdampfenthalpie auf die Reaktionsenthalpie, also in der Phase, in der die zugeführte Energie nicht mehr für die Verdampfung des "Losungswassers", sondern zum Fortschreiten der Kondensation zur Verfügung steht. Dies wird nur durch die beschriebenen Konstruktionsmerkmale des Horizontal-Intensivtrockners und die angegebene Art der Kaltluft-Einwirkung ermöglicht. Würde die Energiezufuhr über die kritische Phase hinaus fortgesetzt, so könnten die spontan entstehenden erheblichen Dampfmengen aus den Kondensationsprodukten Wasser und Formaldehyd nicht mehr aus dem inzwischen zähplastischen Harz entweichen; es würde eine blasige bis schaumige, d.g. geschwächte Struktur der Bindung entstehen. Für die Heizwirkung auf die Bindemittelschicht ist die Wärmeenergie entscheidend, die durch das Heizmedium an die Obefläche des Bindemittels transportiert wird. Diese Wärmemenge ist definiert durch die Temperatur und den Durchsatz des angeblasenen Heizmediums, wobei der Durchsatz wiederum abhängig ist von der Geschwindigkeit und dem Düsenquerschnitt.

Die Temperatur des Heizmediums in den Intensivtrockenzonen liegt am Düsenaustritt bei mindestens 100°C, vorteilhaft bei 120-300°C und' vorzugsweise bei 150-250°C. Das Heizmedium wird zu 50-95%, vorzugsweise zu 70-90% im Kreislauf geführt. Die Erwärmung des Heizmediums kann auf übliche Weise efolgen, z.B. über Wärmeaustauscher, die mit Heißdampf, hochsiedenden Flüssigkeiten oder anderen Medien betrieben werden; sie wird jedoch vorzugsweise direkt mit Rauchgasen bewältigt, wobei eine Teil der aus der Trockenanlage abgesaugten Rauchgase in die Brennzone, zurückgeführt und dort zur Unterhaltung der Verbrennung mit 5-50%, vorzugsweise 10-30% Frischluft vermischt und von dort wiederum dem Trockenkanal zugeführt wird und so fort. Der Verbrennungsraum ist z.B. als intensive Wirbelkammer ausgebildet, so daß die aus dem Phenolharz emittierten restlichen Schadstoffe beim Durchtritt durch die Heizflamme annähernd vollständig zu $CO_2$ und $H_2O$ umgesetzt werden. Wenn dann außerdem noch die bevorzugten Harzsysteme verwendet werden, läßt sich eine weitere beträchtliche Verminderung der Anteile an Schadstoffen, wie Phenol-Anteilen, Formaldehyde und dergl. erreichen, so daß die Abluft kaum noch Schadstoffe enthält.

Im Vergleich zu einer Hangtrockenanlage ermöglicht die erfindungsgemäß verwendete Horizontal-Intensivtrockenanlage auch eine wesentliche Energieeinsparung, die neben der überwiegenden Führung der Trockenluft im Kreislauf vor allem durch ihre kompakte Bauweise sie weist nur 3-10% der Obefläche einer Hängetrockenanlage mit gleicher Leistung auf und der damit verbundenen besseren Isolierbarkeit bewirkt wird.

Ein weiterer wesentlicher Vorteil der erfindungsgemäßen Horizontal-Intensivtrocknung gegenüber der Hangtrocknung ist die schonende Behandlung der Trägermaterialien, die, gleichgültig ob es sich um Baumwollgewebe, Papier oder Vulkanfiber handelt, aus Cellulosefaser bestehen, die auf langzeitige Behandlung mit warmer, trockener Luft mit stark abfallenden Elastizitäts- und Reißfestigkeitswerten reagieren. Bei der erfindungsgemäß angewendeten Horizontal-Intensivtrocknung wirkt die - wenn auch hohe- Temperatur nur kurzzeitig auf die Beschichtung ein, das Trägermaterial bleibt weitgehende unberührt. Zusätzlich kann die Unterseite noch ohne Beeinträchtigung des Trocknungsverlaufs durch Luft gekühlt werden.

Es wird also möglich, die angestrebte Verfestigung der einzelnen Schichten unter den erfindungsgemäßen Bedingungen unter Ausschluß von Schaum- und Blasenbildung oder sonstigen Strukturfehlern in der Bindemittelschicht so zu bewirken, daß die thermischmechanischen Eigenschaften des ausgehärteten Kunstharz-Bindemittels erhalten bleiben oder verbessert werden, so daß bessere Produkte erhalten werden.

Als Komponente 1) eignen sich vorzugsweise solche Phenolharze, die durch Addition und/oder Kondensation von Formaldehyd an einwertige Phenole in Gegenwart von Alkalien oder Erdalkalien als Katalysator hergestellt werden. Die Katalysatoren können im Harz verbleiben oder teilweise oder vollständig entfernt bzw. neutralisiert werden. Es ist auch möglich, einen Teil des Formaldehydes in nicht-reaktiver Form, z.B. in Gestalt von Methylenbrücken, in das Harz einzubauen. Zu diesem Zweck können bei erhöhten Temperaturen die gleichen Katalysatoren wie oben angegeben oder Säuren verwendet werden. Als Komponente 11), die eine hohe potentielle Kondensationsgeschwindigkeit mit Formaldehyd aufweist, werden Mischkondensate aus einwertigen Phenolen, Formaldehyd und mehrwertigen Phenolen, z.B. Resorcin, Brenzkatechin oder Pyrogallol oder Kondensate aus mindestens einem der mehrwertigen Phenole mit Formaldehyd eingesetzt. Bei der Herstellung der Mischkondensate ist darauf zu achten, daß die bekannt schnelle Reaktionsfähigkeit des mehrwertigen Phenols, z.B. des Resorcins, im wesentlichen erhalten bleibt.

Aus der Gruppe der einwertigen Phenole, die bei der Herstellung der Komponenten 1) und 11) eingesetzt werden können, wird m-Kresol, 3,5-Xylenol und vorzugsweise Phenol, $C_6H_5OH$ genannt. Es können aber auch Alkylphenole mit 1 bis 9 C-Atomen im Alkylrest in Mischung mit Phenol verwendet werden, z.B. o-Kresol. Alkylphenole mit 1 bis 9 C-Atomen in Alkylrest, insbesondere mit dem Alkyl in p-Stellung, wie p-Kresol, p-Butyl- oder p-Octylphenol. Der Anteil an Phenol beträgt mindestens 50 Mol-%.

Die Herstellung der Harzkomponente 1) erfolgt in üblicher Weise; z.B. wird einwertiges Phenol mit polymerem Formaldehyd und/oder wäßrigen Lösungen von Formaldehyd, im allgemeinem bei Temperaturen zwischen 30 und 100°C, vorzugsweise zwischen 30 und 80°C umgesetzt, bis der erforderliche Kondensationsgrad erreicht ist. Der Kondensationsgrad wird durch Bestimmung der Viskosität charakterisiert und liegt im allgemeinen bei 200-2000, vorzugsweise 300-1000 mPa.s/20°C. Als Katalysatoren dienen z.B. Natronlauge, Kalilauge, Magnesiumoxyd, Calciumhydroxyd oder Bariumhydroxyd. Sie werden im allgemeinen in Mengen von 0,01 bis 0,9 Mol, vorzugsweise von 0,05 bis 0,7 Mol, bezogen auf phenolisches Hydroxyl, verwendet. Der Harzgehalt der wäßrigen Lösungen liegt im allgemeinen zwischen 50 und 90%, vorzugsweise zwischen 60 und 80%. Er kann entweder durch Destillation eingestellt oder durch Auswahl der Konzentration der Reaktionspartner von vornherein festgelegt werden. Die bei der Herstellung erhaltenen Phenolharzlösungen

4

können als solche eingesetzt werden. Zur Verbesserung der Lagerbeständigkeit ist es oft zweckmäßig, den verwendeten Katalysator zu neutralisieren. Zur Verbesserung der Löslichkeiten in Wasser und zur weiteren Verbesserung der Lagerbeständigkeit können auch wasserlösliche Alkohole wie Methanol, Äthanol, Propanol, usw., mehrwertige Alkohole wie Glykole oder Glycerin in Mengen zwischen 1 und 20, vorzugsweise zwischen 2 und 10 Gew.-%, bezogen auf die Gesamtmenge des Bindemittels, verwendet werden.

Als Komponente II) können Phenol-Formaldehydeharze, hergestellt in üblicher Weise aus einem Mol mehrwertigem Phenol mit weniger als 1 Mol, vorzugsweise 0,5-0,8 Mol Formaldehyd in Gegenwart von 0,05-0,9, vorzugsweise 0,1 - 0,6 Mol Alkalihydroxyd, z.B. als Kali- oder Natriumlauge, eingesetzt werden. Vorteilhaft besteht die Komponente 11) jedoch aus Mischkondensaten aus einwertigem Phenol, Formaldehyd und mehrwertigen Phenolen, vorzugsweise zweiwertigen, z. B. Resorcin. Diese können hergestellt werden, indem man zunächst ein Phenolresol herstellt und dieses anschließend z.B. mit Resorcin umsetzt. Dazu wird 1 Mol einwertiges Phenol, im allgemeinen in Gegenwart von 0,1 -0,9, vorzugsweise 0,2-0,6 Mol Alkali- oder Erdalkali-, vorzugsweise Natriumhydroxyd, im allgemeinen mit 1,1 - 1,9, vorzugsweise 1,3 - 1,8 Mol Formaldehyd bei Temperaturen zwischen 30 und 100°C, vorzugsweise 40 - 80°C, umgesetzt, bis der Formaldehyd verbraucht ist. Dann werden dieser Reaktionsmischung im allgemeinen 0,11-2,0, vorzugsweise 0,2 - 1,5 Mol mehrwertiges Phenol zugefügt und unter gleichen Bedingungen umgesetzt, bis ein durch Viskositätsmessungen charakterisierter Kondensationsgrad erreicht ist. Das ist im allgemeinen der Fall, wenn die Viskosität von 100 - 2000, vorzugsweise 200 - 1000 mPa.s/20°C beträgt. Das molare Verhältnis der eingesetzten Mengen an Formaldehyd zur Summe aus Phenol und mehrwertigen Phenolen darf höchstens 1,5:1 betragen und liegt vorzugsweise zwischen 0,7 und 1,3:1. Es ist aber nicht zweckmäßig, weniger Formaldehyd als 0,6 Mol zu verwenden. Diese Harze können ebenso wie die vorher beschriebene Komponente 1) mit den oben aufgeführten Alkoholen in den genannten Mengen gemischt werden.

Die so hergestellten Harzkomponenten sind im allgemeinen für sich gut lagerbeständig. Auch Gemische verscheidener Phenolresole I) und Mischkondensate II) untereinander können als Mischungskomponenten eingesetzt werden.

Die Komponenten I) und II) werden im allgemeinen im Mischungsverhältnis von 95:5 bis 60:40, vorzugsweise 90:10 bis 70:30 zu einer Bindemittelflotte vermischt, die gegebenenfalls übliche Füllstoffe wie Calciumcarbonat, Gips, Kaolin, Kryolith usw. in üblichen Mengen enthält. Diese Zusätze werden meist nicht dem Grundbindemittel, sondern dem Deckbindemittel zugegeben. Diese Gemische zeichnen sich dadurch aus, daß sie nur noch geringe Mengen an freiem Formaldehyd enthalten und daß auch beim Erhitzen auf höhere Temperaturen, selbst solchen, die über der Verarbeitungstemperatur liegen, Phenol und besonders Formaldehyd in wesentlich verringerten Mengen an die Umwelt abgegeben werden.

Durch ihre besonders hohe Reaktivität, die von Komponenten I) und II) für sich nicht erreicht wird, eignen sich die genannten Harzkombinationen besonders gut für das erfindungsgemäße Schnelltrocknungsverfahren.

Die für dieses Verfahren bevorzugt verwendeten Phenolharzkombinationen zeichnen sich gegenüber der Anwendung von Kombinationen aus Phenolharzen mit Polyvinylalkohol darüber hinaus durch eine geringere Viskosität und daher durch einen höheren Feststoffanteil im Beschichtungsmaterial und höhere Schleifleistung aus.

Durch das erfindungsgemäße Verfahren wird es möglich, die Investitionen für die Anlagen zur Herstellung von Schleifmitteln zu senken, die Trocknungszeiten und den Energieverbrauch zu vermindern, die Emission an umwelbelastenden Stoffen zu verringern und die Qualität der danach hergestellten Schleifmittel zu erhöhen.

Als Unterlagen für die Herstellung von Schleifmitteln kommen im allgemeinen flexible Materialien, wie Papier, Gewebe, Vulkanfiber, Vliesstoff, Folien oder ähnliche in Frage. Als Schleifkorn eignen sich alle üblicherweise verwendeten Materialien wie Sand, Schmirgel, Siliciumcarbid, gekörntes Aluminiumoxyd und andere.

Die Heiz- und Kühlluft bei der Härtung in der Rolle werden bei dem erfindungsgemäßen Verfahren zwar bevorzugt in axialer Richtung eingefürt, jedoch ist diese Richtung nicht obligatorisch. Zweckmäßig, ist es, die Luft zwangsweise, d.h. mittels einer dicht um die locker gewickelte Rolle gelegten flexiblen Manschette, axial durch die Wicklung, also zwischen den Scheifmittelbahnen, hindurchströmen zu lassen.

In den folgenden Beispielen bedeuten T Gewichtsteile und % Gewichtsprozent.

**Beispiele**

Herstellung der Resolkomponente I)

1.) Phenolharz A; In einem mit Rührer und Thermometer ausgestatteten Reaktionsgefäß werden 940 T Phenol geschmolzen und mit 186 T 37%iger wäßriger Formaldehyd-lösung vermischt. Bei 50°C werden dann 38 T 33%ige Natronlauge zugegeben, wobei die Temperatur auf 60°C steigt. Anschließend werden nach Maßgabe der exothermen Reaktion 420 T Paraformaldehyd (91% ig) in Portionen zugegeben und der Ansatz so lange gerührt, bis das Harz eine Viskosität von 600 mPa.s/20°C aufweist. Nach Zugabe von 80 T Methanol wird abgekühlt und mit verdünnter Schwefelsäure ein pH-Wert von 4,8 bis 5,3 eingestellt. Die Ausbeute an fertigem Harz ist quantitativ, Rückstand: 68% (die Rückstandbestimmung erfolgt, indem eine Probe von 2 g eine Stunde auf 135° erhitzt wird), Viskosität: 350 mPa.s/20°C, die sich nach 6 Wochen Lagerung bei Raumtemperatur auf 407 mPa.s/20°C erhöht.

2.) Phenolharz B: Beispiel 1 wird wiederholt, wobei jedoch die Zugabe von Methanol und Schwefelsäure unterbleibt. Das Harz hat eine Viskosität von 650 mPa.s/20°C und einen Rückstand (2 g, 1 Std. 135°C von 72%.

3.) bis 5.): Es werden Mischungen des Harzes A und des Harzes B, jeweils mit dem folgenden Phenolharz C hergestellt..

Phenolharz C: 940 T Phenol und 200 T einer 37%igen wäßrigen Formaldehydlösung werden unter Rühren auf 40°C erhitzt und 600 T einer 33% igen Natronlauge zugegeben. Die Temperatur darf dabei 60°C nicht überschreiten. Anschließend trägt man nach Maßgabe der exothermen Reaktion bei 60°C weitere 610 T einer wäßrigen 37% igen Formaldehydlösung sowie 198 T Paraformaldehyd (91%ig) ein und hält den Ansatz bei dieser Temperatur, bis kein freier Formaldehyd mehr vorhanden ist. Dann trägt man 440 T Resorcin ein, rührt den Ansatz bei 60°C, bis eine Viskosität von 300 mPa.s/20°C erreicht ist, und kühlt ab. Harzrückstand: 62%, Ausbeute: quantitativ. Die Viskosität erhöhte sich nach 6 Wochen Lagerun bei Raumtemperatur nur auf 333 mPa.s/20°C.

6.) Mischung aus Harz A mit folgendem Resorcinnovolak D: 660 T Resorcin und 75 T Wasser werden geschmolzen und mit 3 T 12,5% iger Schwefelsäure versetzt. Zu der auf 110°C erhitzten Schmelze werden 390 T einer wäßrigen 30%igen Formaldehydlösung zugetropft und bei der Temperatur belassen, bis der Formaldehydgehalt 0% beträgt. Das Harz wird auf 80°C abgekühlt und mit 432 T 33%iger Natronlauge versetzt. Rückstand: 65%; Ausbeute: quantitativ; Viskosität: 2640 mPa.s/20°C.

7) Mischung eines Resorcinnovolaks E1 mit einem Phenolresol E2

Resorcinnovolak E1: 440 T Resorcin und 50 T Wasser werden geschmolzen und mit 2 T 12,5%iger Schwefelsäure versetzt. Zu der auf 1 115°C erhitzten Schmelze werden 211 T einer wäßrigen, 37%igen Formaldehydlösung zugetropft und bei dieser Temperatur belassen, bis der Formaldehydgehalt 0% beträgt.

Phenolharz E2: 940 T Phenol werden geschmolzen und mit 720 T Natronlauge (33%ig) versetzt und auf 60°C erwärmt. Bei dieser Temperatur werden 614 T einer 37%igen Formaldehydlösung sowie 205 T Paraformaldehyd (91%ig) nach Maßgabe der exothermen Reaktion zugegeben und der Ansatz bei dieser Temperatur belassen, bis der Formaldehydgehalt 0% beträgt. Zu diesem Ansatz wird die abgekühlte Gesamtmenge des unter E1) beschriebenen Harzes gegeben und auf 70°C erwarmt, bis die Viskosität 145 mPa.s/20°C beträgt. Rückstand: 57,5%, Ausbeute: quantitativ.

Herstellung der Schleifmittel - Vergleichsversuche zwischen Horizontal-Intensiv-Trockner und Hangtrockner: Eine speziell für die Schleifmittelindustrie gefertigte Vulkanfiber von 0.8 mm Stärke und einem Flächengewicht von ca. 1000 /m2 wird mit dem Grundbindemittel in einer Naßfilmstärke von 75 Vm beschichtet und mit Normalkorund (Elektrokorund) der Körnung 80 in einer Menge von 400 g/m2 bestreut. Als Grundbindemittel werden die in der folgenden Tabelle angeführten Versuchsmischungen verwendet. Danach werden die Proben der Tabelle wie folgt behandelt:

**Horizontal-Intensivtrockner:**
Es wird bei 120°C jeweils in der Zeit, wie in der Tabelle angegeben vorgetrocknet und anschließend in 20 s mit einem Kaltluftstrom auf 30°C abgekühlt.

**Hangtrockner:**
Die Temperatur wird gleichmäßig von 40 auf 90°C in der in der Tabelle angegebenen Zeit erhöht.

Nun wird das Deckbindemittel in einer Naßfilmmenge von 200 g/m2 aufgetragen. Als Deckbindemittel wird die jeweilige Phenolharzmischung, gemischt mit der gleichen Menge Kalksteinmehl (Mittlere Korngröße 10 μm), verwendet. Die Deckbindemittelschicht wird dann wie folgt angetrocknet;

**Horizontal-Intensivtrockner:**
Es wird bei 150°C jeweils in der Zeit, wie in der Tabelle angegeben, vorgetrocknet und anschließend in 20 s mit einem Kaltluftstrom auf 30°C abgekühlt.

**Hangtrockner:**
Die Temperatur wird gleichmäßig von 40 auf 110°C in der in der Tabelle angegebenen Zeit erhöht.

Sämtliche Proben werden in aufgerolltem Zustand ausgehärtet, wobei die Temperatur in 12 Stunden gleichmäßig von 20°C auf 110°C angehoben und dann bei geschlossenem Ofen in 10 Stunden wiederum gleichmäßig von 110°C auf unter 40°C gesenkt und die Heiz bzw. Kühlluft in axialer Richtung durch die Rolle geführt wird. Die Proben werden anschließend 24 Stunden bei 25°C und ca. 90% relativer Luftfeuchtigkeit reklimatisiert. Aus der beschichteten Vulkanfiber werden runde Scheiben mit einem Außendurchmesser von 178 mm und einem Innendurchmesser von 22 mm ausgestanzt und die Bindemittelschicht in üblicher Weise "geflext". **Scheiftest:**

Die Scheiben werden Schleiftest unterzogen, der auf dem Prinzip des-Kantenschliffes-' beruht. Dabei werden sie mit einem Anstellwinkel ihrer Rotationsebene von 25° mit einer Andruckkraft von 80 N auf die Kante eines 3 mm dicken Chromnickelstahlbleches gedrückt. Die Tourenzahl beträgt 3200 U/min., die Schleifdauer 9 min. Gemessen wird der Gewichtsverlust V der Schleifscheiben und das Gewicht A des abgespannten Stahls und daraus der Schleifindex $1 = A/V$ errechnet. Bei den mittels Horizontal-Intensivtrockner und den mittels Hangtrockner verarbeiteten Proben wird praktisch derselbe Schleifindex erhalten. **Diskussion der Ergebnisse**

Wie Spalten 6 und 7 der vorstehenden Tabelle zeigen, ist der Zeitaufwand bei der Arbeitsweise mit dem Hangtrockner mindestens 6 mal so hoch wie bei dem erfindungs-gemäßen Verfahren unter Verwendung eines Horizontal-Intensivtrockners.

Darüberhinaus ist der Tabelle zu entnehmen, daß bei Verwendung eines Bindemittels aus verschiedenen Phenolharzen (siehe Proben 3 bis 7) die Emission von Formaldehyd und Phenol im Vergleich zu den Proben 1 und 2 mit nur einem Phenolharz erheblich eingeschränkt wird (vergleiche Spalten 8 und 9). Trotzdem zeigen auch die Proben 1 und 2 einen technischen Fortschritt im Vergleich zu der aufgewendeten Zeit mit dem Hangtrockner durch die einfachere und raschere Herstellungsweise. Aus der letzten Spalte der Tabelle ist ersichtlich, daß sich durch die Variierung der Phenolharz-Kombination der Schleifindex steuern leßt und dadurch bei niedrigen Emissionswerten und rascher Herstellungsweise besonders günstige Schleifindexwerte erreicht werden.

TAB

| Versuch Nr. | Bindemittel (gleich für Grund- und Deckschicht) | | | | Vortrocknung Grundbindung/Deckbindung | | Emission aus 50 μm-Film 1h, 100 | | Schleifindex |
| | Komponente I) | | Komponente II) | | Horizontal-Intensivtrockner | Hänge-trockner | | | |
| | Phenol-harz | Anteil % | Phenol-harz | Anteil % | min | min | Formal-dehyd % | Phenol % | A/V |
|---|---|---|---|---|---|---|---|---|---|
| 1 | A | 100 | — | — | 9,0/8,0 | 65/85 | 0,9 | 6,2 | 7,7 |
| 2 | B | 100 | — | — | 8,0/7,0 | 70/95 | 1,0 | 7,0 | 7,5 |
| 3 | A | 90 | C | 10 | 3,0/3,0 | 40/75 | 0,2 | 5,0 | 8,3 |
| 4 | A | 80 | C | 20 | 2,5/2,2 | 35/70 | 0,1 | 2,9 | 9,0 |
| 5 | B | 80 | C | 20 | 4,0/3,5 | 40/70 | 0,2 | 4,1 | 8,8 |
| 6 | A | 80 | D | 20 | 3,5/3,0 | 35/50 | 0,1 | 3,1 | 7,5 |
| 7 | A | 80 | E1+E2 | 20 | 5,5/5,0 | 40/50 | 0,3 | 4,2 | 7,0 |

## Patentansprüche

1. Verfahren zur Herstellung von Schleifmitteln, die mindestens zwei Bindemittelschichten enthalten, unter Verwendung mindestens eines wäßrigen, aus einem einwertigen Phenol hergestellten Resols I) mit einem Molverhältnis des Phenols zu Formaldehyd von 1:1,1 bis zu 1:2,5 mit oder ohne weitere übliche Zusätze, wobei eine erste Bindemittelschicht auf ein flächenförmiges flexibles Trägermaterial aufgetragen und diese Überzugsschicht nach Aufstreuen des Schleifkornes unter Verwendung einer horizontalen Trocknungsanlage bis zur Nachleimfestigkeit getrocknet und danach mittels eines Luftstroms agbekühlt wird, wobei das beschichtete Trägermaterial mit Geschwindigkeiten über 5 m/min durch die scharf begrenzte und einzeln regulierbare Heiz- und Kühlzonen aufweisende Trockenanlage geführt und dabei von einem Luftstrom mit einer Geschwindigkeit von 5-200 m/s durch die Schlitzdüse mit Austrittstemperaturen der Luft von 20 - 300°C je nach Temperaturzone angeströmt wird, wonach eine zweite Bindemittelschicht aus dem gleichen oder einem anderen Bindemittel aufgebracht und in der für die erste Stufe angegebenen Weise bis zur Aufrollfestigkeit getrocknet und danach abgekühlt wird, wobei die Schlitzdüsen für die Aufheizung und Abkühlung jeweils quer zur Laufrichtung der Schleifmittelbahn angeordnet sind und die Luft durch jeweils benachbarte Absaugdüsen abgesaugt wird und die Endhärtung nach lockerem Aufrollen mittels eines üblichen Verfahrens in der Rolle erfolgt, dadurch gekennzeichnet, daß wenigstens eine aus einer wäßrigen Mischung verschiedener Phenolharze bestehende Mischung aufgebracht wird, wobei die Mischung aus mindestens einem Resol I und mindestens einem Kondensationsprodukt II aus 100 - 10 Mol% mehrwertigem Phenol und 0 - 90 Mol% einwertigem Phenol mit Formaldehyd besteht, wobei das molare Verhältnis der eingesetzten Mengen an Formaldehyd zu Summe de Phenole (0,6 - 1,5):1 beträgt.

2. Verfahren nach Anspruch 1, dadurch gekennzeichnet, daß das Resol 1 vorwiegend ortho-Struktur hat.

3. Verfahren nach Anspruch 1 oder 2, dadurch gekennzeichnet, daß mindestens eine Bindemittelschicht aufgebracht wird, in der das Resol 1 aus Phenol und Formaldehyd im Molverhältnis von 1:1,3 bis 1:2,2 aufgebaut ist.

4. Verfahren nach einem oder mehreren der Anspruche 1 bis 3, dadurch gekennzeichnet, daß eine Bindemittelschicht aufgebracht wird, in der das Kondensationsprodukt 11 pro Mol einwertiges Phenol 1,2 - 1,8 Mol ankondensierten Formaldehyd und 0,2 - 1,5 Mol eines mehrwertigen Phenols enthält und wobei das molare Verhältnis der eingesetzten Mengen an Formaldehyd zur Summe der Phenole (0,7-1,3): 1 beträgt.

5. Verfahren nach einem oder mehreren der Ansprüche 1 bis 4, dadurch gekennzeichnet, daß der Trockenvorgang in weniger als 5 Minuten, insbesondere in weniger als 3 Minuten vorgenommen wird.

6. Verfahren nach einem oder mehreren der Ansprüche 1 bis 5, dadurch gekennzeichnet, daß der Trockenvorgang bei einer Temperatur von 1 1 0 - 160°C vorgenommen wird.

7. Verfahren nach einem oder mehreren der Ansprüche 1 bis 6, dadurch gekennzeichnet, daß die Heiz- und Kühlluft bei der Härtung in der Rolle in axialer Richtung durch das aufgewickelte Material geführt wird.

8. Verfahren nach einem oder mehreren der Ansprüche 1 bis 7, dadurch gekennzeichnet, daß das beschichtete Trägermaterial die Heiz und Kühlzonen mit Geschwindigkeiten von 10 - 200, vorzugsweise 20 - 100 m/min durchläuft.

9. Verfahren nach einem oder mehreren der Ansprüche 1 bis 8, dadurch gekennzeichnet, daß das beschichtete Trägermaterial von einem Luftstrom mit einer Geschwindigkeit von 20-1 00 m/s, vorzugsweise 40 - 0 m/s über seine volle Bahnbreite angeströmt wird, wobei der Abstand der Schlitzdüsen von der Beschichtung jeweils 2-50, vorzugsweise 3 - 20 cm beträgt.

10. Verfahren nach einem oder mehreren der Ansprüche 1 bis 9, dadurch gekennzeichnet, daß das beschichtete Trägermaterial während der Aufheizung und/oder Abkühlung der Beschichtung auf der nicht beschichteten Seite von Kühlluft angeströmt wird.

**Claims:**

1. Process for the preparation of abrasive materials having at least two binder layers while using at least one aqueous resol 1 prepared from a monohydric phenol in a molar ratio of the phenol to formaldehyde of from 1:1.1 to 1:2.5 and with or without further conventional additives, wherein a first binder layer is applied to a sheetlike flexible support and this coating layer is dried after the abrasive grain has been scattered thereupon-while using a horizontal drying unit, to a degree to attain sufficient adhesive strength to prevent displacement of the abrasive particles and is then cooled with an air stream, the coated support being conveyed at a speed of above 5 m/min through the drying unit having welldefined and individually controllable heating and cooling zones and being thereby contacted with an air stream from the slit nozzles having a velocity of from 5 to 200 m/s, the air having outlet temperatures of from 20 to 300° C depending on the temperature zone, whereupon a second binder layer of the same or another binder is applied and dried in the manner defined with regard to the first stage to imprint resistance and is then cooled, the slit nozzles for heating and cooling in each case being arranged transversely to the course of direction of the endless sheetlike abrasive material, the air being drawn off via adjacent extraction nozzles and the final curing being effected in a conventional manner in the roll after loosely rolling up, characterized in that at least one mixture consisting of an aqueous mixture of different phenolic resins is applied, which mixture consists of at least one resol I and at least one condensation product II derived from 100 to 10 mol-% of polyhydric phenol and 0 to 90 mol-% of monohydric phenol and formaldehyde, the molar ratio of the starting amounts of formaldehyde to the sum of the phenols being (0.6 to 1.5):1.

2. Process according to claim 1, characterized in that the resol I predominantly is orthostructurized.

3. Process according to claim 1 or 2, characterized in that at least one binder layer is applied in which the resol I is derived from phenol and formaldehyde in the molar ratio from 1:1.3 to 1:2.2.

4. Process according to one or more of claims 1 to 3, characterized in that a binder layer is applied in which the condensation product II is derivedper mol of monohydric phenol - from 1.2 to 1.8 mols of formaldehyde condensed thereto and from 0.2to 1.5 mols of a polyhydric phenol and wherein the molar ratio of the starting amounts of formaldehyde to the sum of the phenols is (0.7to 1.3):1.

5. Process according to one or more of claims 1 to 4, characterized in that the drying operation is performed in less than 5 minutes, particularly in less than 3 minutes.

6. Process according to one or more of claims 1 to 5, characterized in that the drying operation is performed at a temperature of from 110 to 160° C.

7. Process according to one or more of claims 1 to 6, characterized in that the heating and cooling air is conveyed in an axial direction through the rolled material at the hardening operation in the roll.

8. Process according to one or more of claims 1 to 7, characterized in that the coated support is passed through the heating and cooling zones with a speed of from 10 to 100, preferably 20 to 100 m/min.

9. Process according to one or more of claims 1 to 8, characterized in that the coated support is contacted with an air stream having a velocity of 20 to 100 m/s, preferably 40 to 80 m/s, over its entire width the distance of the slit nozzles from the coating being always 2 to 50, preferably 3 to 20cm.

10. Process according to one or more of claims 1 to 9, characterized in that the coated support is contacted on the non-coated side with cooling air during the heating and/or cooling of the coating.

**Revendications**

1.) Procéde de fabrication de produits abrasifs contenant au moins deux couches de liant, à l'aide d'au moins un résol I) aqueux préparé à partir d'un monophénol avec un rapport molaire du phénol au formaldéhyde de 1:1,1 à 1:2,5 et avec ou sans additifs usuels supplémmentaires, une première couche de liant étant appliquée sur une matière support souple planiforme et cette couche de revêtement, après avoir été saupoudrée des grains abrasifs, étant sechée dans une installation de séchage horizontale jusqu'à la solidité à l'encollage ultérieur et étant ensuit refroidie au moyen d'un courant d'air, la matière support revétue etant conduite, à une vitesse supérieur à 5m/minute, à travers une installation de séchage comportant des zones chaudes et froides netement delimitées et réglables séparément, où ladite matière est exposée à un courant d'air arrivant à une vitesse de 5 à 200 m/s par les buses plates à des températures, à la sortie d'air, de 20 à 300° C selon la zone de température, puis une deuxième couche de liant, constitée du même liant ou d'un autre, étant applique et etant séché de la manière indiquée pour la première étape jusqu'à la solidité à l'enroulement et ensuite refroidie, les buses plates pour le chauffage et le refroidissement étant disposées transversalement à la direction de déplacement de la feuille d'abrasif à chaque fois, l'air étant aspire par des buses aspirantes placées à chaque fois au voisinage des prècedentes et le durcissement final étant effectué, apres enroulement lâche, dans le rouleau lui-même par une méthode usuelle, procédé caractérisé en ce qu'on applique au moins un mélange constitue d'un mélange aqueux de différentes résines phénoliques, le mélange éant constitue d'au moins un résol I) et d'au moins un produit de condensation II) dérivant du formaldéhyd et d'une composante phénolique comprenant de 100 à10% en moles d'un polyphénol et de 0 à 90% en moles d'un monophénol, le rapport molaire de la quantité de formaldéhyde mise en jeu à la somme des quantités des phénols mises en jeu éant compris entre 0,6: 1 et 1,5: 1.

2.) Procédé selon la revendication 1, caractérisé en ce que le résol I) a essentiellement la structure ortho.

3.) Procédé selon l'une des revendications 1 et 2, caractérisé en ce qu'on applique au moins une couche de liant dans laquelle le résol I) est édifié à partir de phénol et de formaldéhyde dans un rapport molaire de 1: 1,3 à 1: 2,2.

4.) Procédé selon l'une quelconque des revendications 1 à 3, caractérisé en ce qu'on applique une couche de liant dans laquelle le produit de condensation II) contient, par mole de monophénol, de 1,2 à 1,8 mole de formaldéhyde condensé et de 0,2 à 1,5 mole d'un polyphénol, le rapport molaire de la quantité de formaldéhyde mise en jeu à la somme des quantités des phénols mises en jeu étant compris entre 0,7: 1 et 1,3: 1.

5.) Procédé selon l'une quelconque des revendications 1 à 4, caractérisé en ce que l'opération de séchage est effectuée en moins de 5 minutes, plus spécialement en moins de 3 minutes.

6.) Procédé selon l'une quelconque des revendications 1 à 5, caractérisé en ce que l'opéation de séchage est effectuée à une température de 110 à 160°C.

7.) Procédé selon l'une quelconque des revendications 1 à 6, caractérisé en ce qu'on envoie l'air chaud et l'air froid, lors du durcissement dans le rouleau, dans la direction axiale à travers la matière enroulée.

8.) Procédé selon l'une quelconque des revendications 1 à 7, caractérisé en ce que la matière support enduite traverse les zones chaudes et froides à des vitesses de 10 à 200 m/minute, de préférence de 20 à 100 m/minute.

9.) Procédé selon l'une quelconque des revendications 1 à 8, caractérisé en ce que lq matière support revêtue est exposée à un courant d'air arrivant à une vitesse de 20 · 100 m/s, de préférence de 40 à 80 m/s, sur toute la largeur de la bande formant la matière support, la distance séparant les buses plates du revêtement étant à chaque fois de 2 à 50 cm, de préférence de 3 à 20 cm.

10.) Procédé selon l'une quelconque des revendications 1 à 9, caractérisé en ce que la matière support enduite est exposée, au cours du chauffage et/ou du refroidissement du revêtement, sur son côte non revêtu, à un courant d'air froid.